Europäisches Patentamt

European Patent Office

Office européen des brevets

(11) Publication number: **0 058 922**
**B1**

# EUROPEAN PATENT SPECIFICATION

(45) Date of publication of patent specification: **08.05.85**

(51) Int. Cl.⁴: **C 22 C 1/02, C 05 D 1/00, C 22 B 21/02, C 22 B 21/04**

(21) Application number: **82101144.2**

(22) Date of filing: **17.02.82**

(54) **Metallurgical process for treating silicon-aluminous-alkaline ores, in particular leucitic ores.**

(30) Priority: **23.02.81 IT 1991581**

(43) Date of publication of application:
**01.09.82 Bulletin 82/35**

(45) Publication of the grant of the patent:
**08.05.85 Bulletin 85/19**

(84) Designated Contracting States:
**DE FR GB**

(56) References cited:
**DE-B-1 471 371**
**US-A-3 954 443**
**US-A-4 046 558**
**US-A-4 053 303**

**CHEMICAL ABSTRACTS, vol. 94, no. 23, June 1981, page 545, no. 190936w, Columbus Ohio (USA);**

(73) Proprietor: **ALLUMINIO ITALIA S.p.A.**
**Piazza Marconi No. 25**
**I-00144 Roma-Eur (IT)**

(72) Inventor: **Landi, Maria Fabrizia c/o Alluminio Italia S.p.A.**
**stab. di Porto Marghera Via Dell'Industria,. 26**
**I-30175, Venezia-Porto Marghera (IT)**

(74) Representative: **Ferri, Antonio**
**c/o BREVETTI EUROPA S.r.l. Piazza Bernini 6**
**I-20133 Milano (IT)**

Courier Press, Leamington Spa, England.

## Description

This invention relates to a metallurgical-type process applied to silicon-aluminous-alkaline ores, in particular to leucitic ores, for the discrete obtainment of rough aluminium-silicon alloys for siderurgy-metallurgy on one side, and of potassic ashes for fertilizers on the other side.

Background of the invention

Several processes have been proposed in the last sixty years for recovering aluminium oxide —$Al_2O_3$— and potassium oxide —$K_2O$—from silicon-aluminious-alkaline ores, such as feldspars (orthoclase, leucite, sanidine and still others), notoriously widely available in nature and consequently potential important alternative raw materials for obtaining aluminium and potassium which, as is known, find broad utilizations in metallurgy (aluminium and alloys thereof) and in agriculture (potassic fertilizers).

All the abovesaid processes are based on an acid or alkaline attack of the alkaline silicon aluminate, usually involving a plurality of wet treatments, such as leachings, decantations, filtrations, etc. Among said processes, a few ones out of the oldest are cited hereinbelow (evidencing, for simplicity's sake, only the type of chemical attack characterizing them), from which the most recent processes are derived, namely:

— the process according to Italian Patent No. 536793 (1925) based on the attack with nitric acid —$HNO_3$— and hydrochloric acid —HCl—;
— the processes according to: French Patent No. 527066 (1920), British Patent No. 195084 (1923), French Patent No. 693074 (1930), and British Patent No. 342617 (1930), all based on the attack with lime —CaO— at 1000—1400°C;
— the process based on the attack with sodium nitrate —$NaNO_3$— under pressure, according to the documents cited by Rev. Prod. Chim. *28*, 1925, 221;
— the process according to French Patent No. 556994 (1922) based on the attack with calcium hydrate —$Ca(OH)_2$— under pressure (for the only recovery of potassium in the form of hydrate —KOH—).

More recently several other processes have been developed, out of which, for example, a process based on the attack with hydrochloric acid, another based on the dry attack by sintering with sodium carbonate —$Na_2CO_3$— and calcium carbonate —$CaCO_3$— and a further one based on the attack with sulphuric acid —$H_2SO_4$— : this last process has been then developed distincted into derived processes substantially based (after the various acid attack operations leading to the forming of double sulphate of potassium and hydrated aluminium —$K_2SO_4 . Al_2(SO_4)_3 . 24 H_2O$— )on:

— separation of aluminium by precipitation thereof with ammonia —$NH_3$— in the form of hydrated aluminium —$Al(OH)_3$— and subsequent calcination of the latter to aluminium oxide —$Al_2O_3$— (which is, therefore, one of the finished products);
— utilization of the solution of ammonium sulphate —$(NH_4)_2SO_4$— and of potassium sulphate —$K_2SO_4$— (co-produced in the aforesaid precipitation with ammonia) according to one of the three alternatives summarized hereinbelow:
— alternative a): final production of potassium sulphate and of ammonium sulphate and mixtures thereof, through various fractionated separation operations (evaporations, coolings, centrifugations, dryings). Said sulphates are intended for fertilizers;
— alternative b): final production of $K_2SO_4$ (for fertilizers) and of clinker for cement, by means of the following main operations: decomposition with lime —CaO— of said solution of aluminium sulphate and potassium sulphate for re-obtaining ammonia (which is recycled, for being reutilized, to the separation of aluminium by precipitation, as mentioned hereinbefore), and utilization of the residual mixture in water consisting of calcium sulphate —$CaSO_4$— (in suspension) and potassium sulphate (in solution) for the final production of $K_2SO_4$ (by filtration, crystallization, centrifugation, drying), and of clinker for cement (filtration and decomposition of calcium sulphate, addition of additives and of coal);
— alternative c): it follows alternative b) with the only exception that calcium sulphate (filtered from said mixture in water of calcium sulphate and potassium sulphate), is utilized, for the anionic portion —$SO_4$— for the production of ammonium sulphate (for fertilizers), and for the cationic portion —Ca— for the reuse of the latter in the form of CaO in said first decomposition step of the solution of ammonium sulphate and potassium sulphate.

Said $CaSO_4$ reutilization step is based on a leaching operation with ammonia and carbon dioxide —$CO_2$— wherefrom said ammonium sulphate is obtained, on one side, and, on the other side, $CaCO_3$ which, by decomposition, provides aforesaid CaO and $CO_2$.

The processes schematically reported hereinbefore suffer from considerable drawbacks, in particular:

— for the processes based on the acid attack, serious difficulties arise during the separation of the silica (which often is in the colloidal form) and during the decomposition of the aluminium salts, with remarkable losses of process acid utilized for the attack. It is furthermore necessary to employ high amounts of said acid for fixing potassium in the form of salt as well as the ammonium anion—in the form of salt too—when the process includes the use of ammonia;
— for the processes based on the alkaline attack there is the necessity of employing high amounts of CaO and of co-producing great amounts of products intended for the cement industry, which have a low economic value.

By consequence, the above-cited processes are —for the reasons described and specified hereinbefore—substantially complex and anti-economic. In spite of this, in even more recent years—to stress the importance of the problem in question—further attempts have been made at succeeding in industrially utilizing the silicon-aluminous-alkaline ores by means of various processes, which however appear substantially as modified processes of the ones indicated and schematically described hereinabove. In particular there are cited hereinbelow, with the relevant main featuring data, the following processes:

— the process according to U.S. Patent No. 3679361 (1972), which comprises an attack with sulphuric acid (and the consequent known forming of double sulphate of aluminium and potassium), a calcination of said double sulphate with forming of sulphur dioxide —$SO_2$— (successively utilized for producing sulphuric acid, the latter being re-utilized in the same process) and of $K_2SO_4$—$Al_2O_3$ wherefrom successively, by leaching, filtering and crystallization, $K_2SO_4$ (for fertilizers) and $Al_2O_3$ are obtained, the latter, after drying, being conveyed to its known utilizations;
— the process based on the attack with nitric acid and separation of the iron impurities —$Fe^{3+}$— by extraction with acetylacetone and trichloroethylene (Paolini, Sebastiani and Variali—Chim. Ind. *62*, 1980, 3);
— the process based on the attack with HCl, after calcining at 1200°C (Cocco, Colussi e Meriani—Chim. Applic. Ind., 1979, 77).

The aforesaid three processes, as well as the preceding ones, do not depart however from the line of the classic predominantly chemical process.

Beljajew—Rapoport and Firsanowa in the volume "Application of the Electrothermal Processes to the Aluminium Metallurgy" 2nd vol. (1957) diffusely treat the behaviour of alumina and silica in the electric furnace reduction processes, in particular the behaviour of clays and kaolins (aluminium silicates $Al_2O_3$ . $2SiO_2$ . $2H_2O$), which may be sometimes impure owing to the presence of alkalis ($K_2O$, $Na_2O$). In such work it is said that in the case of utilization of clays or gneiss granites impure due to alkalis, the reduction reaction trend is determinantly jeopardized by the presence of said alkalis in the reaction charge.

As far is as known there are no processes based on the direct reduction of silicon-aluminous-alkaline ores which enable to substantially obtain, in a single basic metallurgical operation, the separation of aluminium and silicon, on one side, and of the alkali, on the other side (potassium, in this specific case). Also recent studies carried out with a view to producing aluminium-silicon alloys in electric furnaces or by reduction in blast furnaces, consider the utilization of raw materials consisting of aluminium silicates, but not of alkaline silicon-aluminates.

From the foregoing it is apparent that the problem of the recovery of aluminium and potassium from silicon-aluminous-alkaline ores has not yet found a satisfactory solution either by metallurgical processes or by typically chemical processes, especially wet-processes, the latter exhibiting serious drawbacks connected, on one side, with the large sizes of the plants in relation to the high masses of reagents and products involved (among which many inerts) and to the large number of process steps, and, on the other side, with the low substance yields.

Summary of the invention

It is an object of the present invention to provide a process of the metallurgical type, which permits the recovery of aluminium and potassium from silicon-aluminous-alkaline ores, avoiding the above-mentioned drawbacks.

It is another object of the present invention to accomplish said recovery of aluminium and potassium in chemically useful forms suited to their successive utilization in the metallurgical field and in the fertilizers field, respectively.

These and still other objects, which will be more clearly apparent to those skilled in the art from the following description and examples, are achieved, according to the present invention, by a process based on the direct carbo-electro-thermal reduction of the abovesaid ores (hereinafter referred to as silicon-aluminate-potassic).

Description of the invention

More particularly the invention consists in a process for extracting aluminium and potassium from silicon-aluminous-alkaline-ores, particularly from leucitic ores, in form useful to their successive utilization in metallurgy and fertilizers, respectively, as claimed in claims 1 to 3.

The aluminium-silicon alloy, formed in the solidification step of the cast, can be directly utilized as deoxidising agent in siderurgy, or it may be conveyed to enrichment and purification processes for the production of aluminium-silicon alloys having a high percentage of aluminium.

The process in question, as is schematically described in the foregoing, is better illustrated by the following examples.

In such examples, the compositions are expressed by symbols and known chemical formulas, and as percentages by weight (unless otherwise specified).

Example 1

A test was carried out using a lot of 1 ton of a silicon-aluminous-potassic ore having the following composition (referred to the not dried ore as such):

| — $Al_2O_3$ | 24% |
| — $SiO_2$ | 50% |
| — $Fe_2O_3$ | 1% |
| — $TiO_2$ | 0.5% |
| — CaO | 2.5% |
| — $K_2O$ | 9.8% |
| — $Na_2O$ | 1.0% |
| — MgO | 0.5% |
| — Other impurities and "calcination losses" | 10.7% |

A portion of said ore was mixed with coke and clay as a binder in order to get about 100 kg of a charge containing about 12% of coal, at the end of the preparation of said charge, after drying of same, the following composition (calculated on the dry product) having been obtained:

| — $Al_2O_3$ | 23.87% |
| — $SiO_2$ | 51.30% |
| — $TiO_2$ | 0.52% |
| — $Fe_2O_3$ | 1.05% |
| — CaO | 2.10% |
| — $Na_2O$ | 0.84% |
| — $K_2O$ | 7.46% |
| — MgO | 0.42% |
| — C | 11.78% |
| — Other impurities | 0.66% |

40 kg of charge having said composition were agglomerated, by means of a tray granulator in the form of pellets (spherical granules) having a diameter of 15—20 mm, and were charged (over an approximate 10-hour period during the reduction process) into a single-phase electric arc furnace (with a graphite electrode having a diameter of 85 mm), after a furnace preheating time of about 5 hours at approx. 1500°C (arc zone). The furnace's running conditions were the following (expressed by known symbols):

| — Voltage between electrode and bottom of the furnace | 20 V |
| — Current density | 15 A/cm² |
| — Effective power | 15 kW |
| — cos φ | 0.8 |
| — Temperature of the charge | 2200—2250°C |

After a 3-hour dwell time of the charge in the furnace under the abovesaid running conditions, three successive castings of aluminium-silicon alloy were effected at three-hour intervals, and during the run the potassic ashes, entrained by the furnace gases, were collected by means of an air filter.

Data and results relating to the abovesaid test are reported hereinbelow:

— Weight balance at the end of the test:

| — Charge utilized for the forming of the autocrucible in the furnace | approx. 1 kg |
| — Charge resulting not reduced | approx. 2 kg |
| — Casting product (Al-Si and impurities) | 13.75 kg |
| — Potassic ashes | 4.5 kg |
| — Gas losses | difference to balance. |

— Castings:

| — Product of the 1st casting | 3.5 kg |
| — Product of the 2nd casting | 4.5 kg |
| — Product of the 3rd casting | 5.75 kg |

— Average analysis of the cast product:

| — Fe | 2.15% |
| — Si | 59.12% |
| — Al | 33.16% |
| — K | absent |
| — C | 0.08% |
| — Ca | 4.37% |
| — Ti | 0.7% |
| — Na | absent |
| — Mg | traces |
| — Other substances to 100 | 0.42% |

— Recovery yields (in the cast product in respect of the dry ore, net from the charge utilized for the autocrucible and from the not reduced one):

| — Aluminium | 90% |
| — Silicon | 85% |

— Composition of the potassic ashes:

— Si (present in part as Si and in a
small part reoxidized as $SiO_2$)  29%

— Na  4.68%

— K  54%

— Al  9.31%

— C  traces

— $SO_2$  1.2%

— Others  balance
to 100.

Example 2

A test was carried out by utilizing 500 kg of an ore of the same lot of Example 1, which was successively enriched with $Al_2O_3$ to obtain—after such enrichment—an "enriched ore" having the following composition (referred to the not dried product):

— $Al_2O_3$  30.0%

— $SiO_2$  48.0%

— $TiO_2$  0.5%

— $Fe_2O_3$  0.8%

— CaO  2.0%

— $Na_2O$  0.5%

— $K_2O$  9.0%

— MgO  0.6%

— Other impurities and
"calcination losses"  balance to 100.

A part of said enriched ore was mixed with coke and potassic aluminate as binder, in order to obtain about 170 kg of a charge at about 12% of coal, thus obtaining, at the end of the preparation of said charge, after drying of same, the following composition (on a dry basis):

— $Al_2O_3$  31.0%

— $SiO_2$  41.5%

— $TiO_2$  0.45%

— $Fe_2O_3$  0.7%

— CaO  1.8%

— $Na_2O$  0.7%

— $K_2O$  11.04%

— MgO  0.5%

— C  12.0%

— Other impurities  balance to 100.

150 kg of a charge having said composition were agglomerated, by means of a tray-granulator, in the form of spheric granules ("pellets") having a diameter of 15—20 mm, and were fed to the same single-phase electric furnace of Example 1 over a time-period of about 38 hours, after a preheating time of the furnace itself, as in Example 1.

The furnace running conditions were the following:

— Voltage between electrode and
furnace bottom  22 V

— Current density  17 A/cm²

— Effective power  17.4 kW

— cos φ  0.81—0.83

— Temperature of the smokes  25—28°C.

After a 3-hour run, 11 castings of aluminium-silicon alloy were carried out at intervals of about 3 hours, adding to the furnace feeding charge, after the first two castings, wooden shavings for purposes of rendering the reaction mass more porous and of facilitating the release of the reaction gases.

The potassic ashes were gathered as in Example 1. Data and results relating to the abovesaid tests are reported hereinbelow:

— Weight balance at the end of the test:

— Charge utilized for the forming
of the autocrucible in the furnace about 2.0 kg

— Charge resulting not reduced  about 1.8 kg

— Total cast alloy (Al-Si and
impurities)  48.26 kg

— Potassic ashes  22.76 kg

— Average analysis of the cast product:

— Al  43.68%

— Si  49.20%

— Fe  1.48%

— C  0.06%

— Ca  3.89%

— Ti  0.80%

— Mg  0.85%

— Other substances to 100  0.04%

— Recovery yields (evaluated as in Example 1):

— Aluminium (in the alloy) 88%

— Silicon (in the alloy) 84%

— Potasium (in the ashes)
    substantially 100%

— Composition of the potassic ashes:

    — Si 19.85%

    — Na 3.34%

    — K 60.19%

    — Al 12.21%

    — $SO_2$ 2.2%

    — $CO_2$ 1.0%

    — Other substance the balance
    to 100.

Example 3

A portion of the same "enriched ore" of Example 2 was mixed with anthracite coal, lignite and potassium aluminate as binder, in order to obtain about 160 kg of a charge at about 12.5% of coal (5% of which consisting of said lignite), thus obtaining at the conclusion of the preparation of said charge, after drying of same, the following composition (on a dry basis):

    — $Al_2O_3$ 30.6%

    — $SiO_2$ 41.9%

    — $TiO_2$ 0.46%

    — $Fe_2O_3$ 0.80%

    — CaO 1.65%

    — $Na_2O$ 0.75%

    — $K_2O$ 9.85%

    — MgO 0.40%

    — C 12.50%

    — Other impurities the balance
    to 100.

150 kg of a charge having said composition were agglomerated as in Example 2, dried at about 200°C and fed to the same single-phase electric furnace of Example 1 in about a 35-hour period (after preheating of said furnace as in the preceding Examples).

The furnace running conditions were the following:

— Voltage between electrode and
    furnace bottom 17 V

— Current density 16 A/cm²

— Effective power 12.8 kW

— cos φ 0.83

— Temperature of the smokes 25—28°C.

After a 3-hour run, 12 castings of aluminium-silicon alloy were carried out at intervals of 2.5—3 hours, adding to the furnace feeding charge, after the first two castings, wooden shavings as in Example 2, and collecting the potassic ashes as in Example 1.

Data and results relating to the abovesaid test are reported hereinbelow:

— Charge utilized for the forming of
    the autocrucible in the furnace 2.1 kg

— Charge resulting not reduced 1.2 kg

— Total cast alloy 50.15 kg

— Potassic ashes 20.66 kg

— Average analysis of the cast product:

    — Al 43.13%

    — Si 50.19%

    — Fe 1.63%

    — Ca 3.41%

    — Ti 0.80%

    — Mg 0.69%

    — C 0.08%

    — Other substances to 100 0.07%

— Recovery yields (evaluated as in Example 1):

    — Aluminium (in the alloy) 91%

    — Silicon (in the alloy) 88%

    — Potassium (in the ashes)
    substantially 100%

— Composition of the potassic ashes:

| | |
|---|---|
| — Si | 16.65% |
| — Na | 3.97% |
| — K | 59.34% |
| — Al | 10.36% |
| — $CO_2$ | 2.50% |
| — $SO_2$ | 2.84% |
| — Other substances | the balance to 100. |

No presence of aluminium carbide was observed in the Al-Si alloys obtained in abovesaid Examples 1, 2 and 3.

In particular the electric furnace can be of the three-phase type and the relevant operative conditions can be adapted, according to what is known in the art, to such type of furnace.

**Claims**

1. A process for extracting aluminium and potassium from silicon-aluminous-alkaline ores in forms useful to their successive utilization in metallurgy and in fertilizers, respectively, comprising conventional methods to provide agglomerates formed by said ores mixed with reducing substances, particularly coal bearing materials such as coke, lignite, anthracite and charcoal, said agglomerates being in the form of granules or the like having a mean diameter ranging from the size of 1 to 5 cm, and being ready to be treated in an electric furnace for the carbo-thermal-reduction of said ores, said electric furnace being an electric arc furnace, the run parameters of which are chosen and adjusted for its actual "arc" running, the voltage between the electrode(s) and the conductive bottom being not lower than 15 V, the current density being 8 to 18 $A/cm^2$ and the temperature of the charge ranging from 2000 to 2400°C, and, during said carbo-thermal-reduction operation, an aluminium-silicon alloy is casted and a K-containing ash being separated from the furnace gases, said ash containing potassium for at least a quantity of 40% by weight.

2. A process according to claim 1, in which the current density is 12 to 16 $A/cm^2$ and said granules include a coal bearing material in an amount of 11 to 13% by weight, expressed as "fixed carbon".

3. A process according to the preceding claims in which the silicon-aluminous-alkaline ores are leucite ores.

**Patentansprüche**

1. Verfahren zur Extraktion von Aluminium und Kalium aus Si-Al-Alkali-Erzen in zu deren weiteren Verwertung in Metallurgie beziehungsweise in Düngermitteln nützlichen Formen, welches herkömmliche Methoden zur Herstellung von Agglomeraten einschliesst, die aus diesen mit Reduktionsmitteln, insbesondere kohletragenden Stoffen, wie z.B. Koks, Lignit, Anthrazit und Holzkohle, gemischten Erzen bestehen, wobei genannten Agglomerate in Form von Körnern oder in ähnlicher Form vorliegen, die einen durchschnittlichen Durchmesser zwischen 1 und 5 cm aufweisen und zur Behandlung in einem elektrischen Ofen zwecks karbothermischen Reduktion vorerwähnter Erze geeignet sind, wobei solcher elektrische Ofen ein elektrischer Lichtbogenofen ist, dessen Betriebsparameter für seinen eigentlichen "Lichtbogen"-Betrieb gewählt und eingestellt sind, wobei die Spannung zwischen der Elektrode (den Elektroden) und dem leitfähigen Boden nicht unter 15 V liegt, die Stromdichte 8 bis 18 $A/cm^2$ und die Temperatur des Einsatzes 2000 bis 2400°C beträgt, und, während der obengenannten karbothermischen Reduktion, eine Al-Si-Legierung gegossen wird und K-enthaltende Asche aus den Ofengasen ausgeschieden wird, wobei diese Asche einen Kaliumgehalt von mindestens 40 Gew.-% aufweist.

2. Verfahren gemäss Anspruch 1, bei welchem die Stromdichte zwischen 12 und 16 $A/cm^2$ liegt, und genannte Körner einen kohletragenden Stoff in einer Menge von 11 bis 13 Gew.-%, ausgedrückt als "gebundenen Kohlenstoff", enthalten.

3. Verfahren gemäss den vorhergehenden Ansprüchen, bei welchem die Si-Al-Alkali-Erze leuzitische Erze sind.

**Revendications**

1. Un procédé d'extraction d'aluminium et de potassium à partir de minerais formés d'aluminosilicates alcalins sous une forme utilisable pour leur utilisation ultérieure respectivement en métallurgie et pour l'obtention d'engrais, comprenant des méthodes classiques de formation d'agglomérés formés à partir desdits minerais mélangés à des substances réductrices, notamment des matières contenant du charbon tel que coke, lignite, anthracite et charbon de bois, ces agglomérats étant sous la forme de granules ou similaires et ayant un diamètre moyen approximativement de l'ordre de 1,5 mm et étant susceptibles d'être traités, dans un four électrique par réduction carbothermique desdits minerais, ce four électrique étant un four à arc électrique, les paramètres de fonctionnement étant choisis et ajustés pour la formation réelle de cet arc et la tension entre les électrodes et la sole conductrice n'étant pas inférieure à 15 volts et la densité de courant étant comprise entre 8 et 18 ampères par $cm^2$, la température de la charge étant comprise entre 2000 et 2400°C et la coulée de l'alliage aluminium-silicium étant effectuée durant ladite opération de réduction carbothérmique et une cendre contenant du potassium étant séparé e du gaz du four, ladite cendre contenant du potassium en une quantité d'au moins 40% en poids.

2. Un procédé selon la revendication 1, dans lequel la densité de courant est de 12 à 16 ampères par cm², ladite granulation incluant une matière contenant du charbon et une quantité de 11 à 13% en poids exprimée en tant que charbon fixé.

3. Un procédé selon les revendications précédentes dans lequel le minerai à base de silico-aluminates alcalins est un mineral formé de leucites.